# EUROPÄISCHE PATENTSCHRIFT

(11) **EP 1 691 097 B1**
(45) Veröffentlichungstag und Bekanntmachung des Hinweises auf die Patenterteilung: **15.04.2009**
(21) Anmeldenummer: 05100994.2
(22) Anmeldetag: 11.02.2005
(51) Int. Cl.: F16D 3/28

(54) **Isolierung für ein kardanisches Kreuzgelenk**
Insulation for a crosspiece of a universal joint
Isolement pour un croissillon d'un joint universel

(43) Veröffentlichungstag der Anmeldung: 16.08.2006
(73) Patentinhaber: Ford Global Technologies, LLC, Dearborn, MI 48126 (US)
(72) Erfinder: Gross, Norbert, D- 40221, Düsseldorf (DE); Schmitz, Thomas, 45219, Essen (DE)
(74) Vertreter: Drömer, Hans-Carsten

(56) Entgegenhaltungen:
- EP-A- 0 967 411
- WO-A-01/51823
- DE-A1- 10 001 270
- FR-A- 2 138 424
- GB-A- 851 174

## Beschreibung

Die Erfindung betrifft ein Kardangelenk nach dem Oberbegriff des Anspruchs 1.

Kardangelenke werden üblicherweise verwendet, wenn zwei drehmomentübertragende Wellen, deren fluchtende Ausrichtung nicht immer gewährleistet ist, miteinander verbunden werden sollen. Das Kardangelenk besteht dabei üblicherweise aus zwei einander gegenüberliegenden, um 90° gegeneinander radial verdrehten Gelenkgabeln, die jeweils ein Ende der zwei gelenkig miteinander zu verbindenden Wellen darstellen. Zwischen den Gelenkgabeln ist das Gelenkkreuz angeordnet, das aus zwei um 90° gegeneinander versetzten Zapfenträgern besteht, wobei das Gelenkkreuz einstückig hergestellt ist, so daß die beiden Zapfenträger starr miteinander verbunden sind. Die Zapfenträger sind dabei jeweils in den beiden Gelenkgabeln um ihre Achse drehbar gelagert.

Bei der Übertragung von Antriebskräften, ist der Fachmann regelmäßig vor die Aufgabe gestellt, zwar die Drehbewegung zu übertragen, Schwingungen und Stöße aber bei der Übertragung möglichst zu eliminieren. Derartige Störungen können beispielsweise durch Schwingungen von der Antriebseinheit hervorgerufen werden. Dieses Problem macht sich besonders im Automobilbau, insbesondere im Bereich des Antriebsstrangs, beispielsweise im Bereich der Kardanwelle, wo die Schwingungen zwischen Antriebsaggregat und Hinterachse ungehindert übertragen werden, und im Bereich des Lenkungsstranges bzw. in der Lenksäule, wo bei Verwendung herkömmlicher Kardangelenke keinerlei Isolierung gegen durch Fahrbahnunebenheiten aufgezwungene niederfrequente Schwingungen bzw. Stöße erfolgt, bemerkbar. Derartige Störungen können einerseits zu Schädigungen im Antriebsstrang bzw. der Lenksäule und/oder zu akustischen oder mechanischen Beeinträchtigungen beim Fahrer führen.

Zum Zwecke akustischer oder schwingungsdynamischer Abkopplung, insbesondere in der Lenksäule ist es beispielsweise bekannt eine torsionselastische Kupplung mit einer so genannten Hardy-Scheibe, als axial elastisches Kupplungselement oder einer Schlingenscheibe zu verwenden. Die Hardy-Scheibe wird beispielsweise in der Lenksäule zwischen dem unteren Kardangelenk und einem Lenkgehäuse bzw. Lenkgetriebe oder zwischen den Kardangelenken angeordnet. Die in Drehrichtung steife Hardy-Scheibe ist derart ausgestaltet, daß diese in axialer Richtung der Lenksäule weich ist. Prinzipbedingt ist die Biegesteifigkeit der Hardyscheibe relativ gering. Dies bewirkt eine Verzerrung der Hardyscheibe mit den Biegemomenten aus dem Kardangelenk, falls die Hardyscheibe wie üblich in Serie mit dem Kardangelenk angeordnet ist. Da eine Hardyscheibe allein (ohne Kardangelenk) zumindest bei entsprechenden Standzeiten nicht geeignet ist, nicht fluchtende Wellen miteinander zu verbinden, wird nachteilig die Anzahl der Bauteile mit der notwendigen Serienanordnung mit dem Kardangelenk erhöht. Darüber hinaus ist der axiale Bauraum dadurch erhöht, und die übliche Kompensation der Ungleichförmigkeiten mit zwei gegenphasig angeordneten kardanischen Gelenken wird durch die zusätzliche Hardyscheibe gestört, da sie in Serie placiert wie ein zusätzliches Gelenk wirkt.

Die EP 0 563 940 B1 betrifft ein Kreuzgelenk mit zwei einander gegenüberliegenden, um 90° gegeneinander versetzten Gabeln, die jeweils Bestandteil je einer von zwei gelenkig miteinander zu verbindenden Wellen sind, oder die jeweils mit je einem von zwei gelenkig miteinander zu verbindenden Wellenenden verbindbar sind. Das Kreuzgelenk weist zwei um 90° gegeneinander versetzte, ein Zapfenkreuz bildende Zapfenpaare auf, die in den jeweiligen Gabelenden um ihre Achse drehbar und, bezogen auf die Drehachse der Wellen, drehmomentübertragend gelagert sind. Die beiden Zapfenpaare sind in der durch das Zapfenkreuz gebildeten Ebene zumindest geringfügig gegeneinander verschwenkbar, wobei jeder Zapfen in einem Ankerbock gelagert ist. Einander benachbarte Ankerböcke sind durch ein elastisches Kupplungselement miteinander verbunden. Das elastische Kupplungselement enthält ortsfest angeordnete, schlingenförmige Verstärkungseinlagen, die jeweils zwei benachbarte Ankerböcke miteinander verbinden. Die schlingenförmigen Verstärkungseinlagen liegen entlang dem Umfang des Kreuzgelenkes in einer Schlingenebene, die senkrecht zur Ebene des Zapfenkreuzes ist.

Als ein Hauptnachteil des in der EP 0 563 940 B1 offenbarten Kreuzgelenkes ist anzusehen, daß die beiden Zapfenpaare unterschiedlich die eigenen Zapfen schlüssig miteinander verbindet: Das eine Paar verwendet einen durchgängigen Bolzen, das andere Paar ist konfiguriert aus zwei kurzen Zapfen, die durch ein zusätzliches Verbindungsstück miteinander verbunden werden. Hierdurch wird zur Herstellung eines jeden Zapfens bzw. Zapfenpaares ein unterschiedliches Herstellungswerkzeug benötigt, wodurch die Herstellung des Kreuzgelenkes äußerst kostenintensiv ist. Das erforderliche Verbindungsstück beschränkt zudem die axiale und radiale Freigängigkeit des Gelenks. Außerdem ist der axiale Bauraumbedarf optimierbar.

Nachteilig ist weiterhin, daß das in der EP 0 563 940 B1 offenbarte Kreuzgelenk in seiner Konstruktion sehr aufwendig und damit sehr störanfällig ist. Als Nachteil ist weiter anzusehen, daß die Gabeln in der Weite klein und deren Gabellager somit größer (teurer) ausgeführt werden müssen, um bei sinnvollen Baugrößen ein hinreichendes Drehmoment zu übertragen. Wird bei dem Kreuzgelenk der EP 0 563 940 B1 der flexible Ring beschädigt, muß ein Ersatzring radial über die Anker zugeführt werden. Darüber hinaus ist das Kreuzgelenk gerade bei schnell drehenden Wellen schwierig auszuwuchten.

In der US 4,850,933 ist eine flexible Verbindung zur Verbindung einer angetriebenen Welle mit einer anzutreibenden Welle offenbart. Die Verbindung umfaßt:
eine flexible Zentralscheibe, die eine winklige Ausrichtung ermöglicht,
eine Mehrzahl tragender Blattfedern, die eine parallele Ausrichtung ermöglichen, wobei die Blattfedern jeweils erste und zweite Enden aufweisen,
eine Antriebsplatte und eine angetriebene Platte,
ein erstes paar L-förmige Haltenasen, die mit gegenüberliegenden Seiten der angetriebenen Platte und mit dem ersten Ende des ersten Paares der Blattfedern verbunden sind,
ein zweites paar L-förmige Haltenasen, die mit gegenüberliegenden Seiten der anzutreibenden Platte und mit dem ersten Ende des zweiten Paares der Blattfedern verbunden sind,
Mitteln, die mit dem ersten Paar L-förmige Haltenasen verbunden, aber getrennt davon sind, zur Verbindung der zweiten Enden des ersten Paares der Blattfedern mit gegenüberliegenden Enden der flexiblen Zentralscheibe,
Mitteln, die mit dem ersten Paar L-förmige Haltenasen verbunden, aber getrennt davon sind, zur Verbindung der zweiten Enden des zweiten Paares der Blattfedern mit gegenüberliegenden Enden der flexiblen Zentralscheibe,
eine erste Verbindungsnabe, die mit der angetriebenen Platte verbunden ist, um die angetriebene Platte mit der Antriebswelle zu verbinden,
eine zweite Verbindungsnabe, die mit der anzutreibenden Platte verbunden ist, um die anzutreibenden Platte mit der anzutreibenden Welle zu verbinden.

Die EP 0 160 599 beschreibt eine elastische Kupplungseinheit mit einem ersten und einem zweiten Gabelgelenk zur Befestigung an jeweils einem treibenden Element und einem getriebenen Element. Die Gabelgelenke weisen derart angeordnete Schenkel auf, daß die Schenkel des ersten Gabelgelenks und des zweiten Gabelgelenks ineinander geschachtelt sind. An jedem Gabelgelenk ist eine Zierblende befestigt, wobei die Flächen dieser zwei Zierblenden nahezu senkrecht zur Drehachse der Einheit angeordnet sind, daß ein Verbindungselement aus Elastomer an diesen Zierblendenflächen befestigt ist. Jede Zierblende ist an dem jeweiligen Gabelgelenk mittels eines in mindestens eine Öffnung der Zierblende und in den Schenkeln des Gabelgelenks ausgesparte Ausnehmungen eingeführten Bolzens befestigt.

Die GB 942,495 offenbart eine Verbindung für Wellen. Die Verbindung weist eine flexible Scheibe mit Kupplungselementen auf, die jeweils an einer Seite der Scheibe angeordnet sind. Jedem Kupplungselement ist eine zu verbindende Welle zugeordnet. Die Kupplungselemente sind in einem rechten Winkel um die Scheibe gedreht, und liegen normal zur Scheibenachse. Während des Betriebes der Verbindung, kann eine winklige Ausrichtung der verbundenen Wellen angepaßt werden, in dem die Kupplungselemente gedreht werden, ohne daß die Scheibe gebogen wird. Die Scheibe besteht ganz oder teilweise aus Plastik, Gummi oder ähnlichen elastischen Material, so daß dieses während der Verbindung biegefrei ist.

Als ein Hauptnachteil der in der GB 942,495 offenbarten Verbindung für Wellen ist anzusehen, daß die Kupplungselemente mit Spiel zur Scheibe und mit signifikanter Reibung gedreht werden, wobei das Verdrehspiel und die Reibung lediglich geringen Ansprüchen genügt.

In der FR 2 568 329 ist ein Kardangelenk offenbart. In dem Kardangelenk ist ein Dämpfungselement angeordnet. Ein Kreuzzapfen ist in zwei Zapfenträger aufgelöst, die zentral über eine elastische Buchse verbunden sind. Nachteilig ist hierbei, daß die zentral angeordnete Buchse nur eine relativ hohe Drehnachgiebigkeit (mit geringer Drehsteigigkeit) liefert kann, da das aus dem eingeleiteten Drehmoment resultierende Kräftepaar nur einen relativ kleinen Wirkabstand hat.

Die GB 851174 offenbart ein Kardangelenk, das zwei Gelenkgabeln und ein Gelenkkreuz aufweist. Die beiden Gelenkgabeln sind radial um 90° zueinander verdreht angeordnet, so dass ein Zwischenraum gebildet ist. In dem Zwischenraum ist das Gelenkkreuz angeordnet. Das Gelenkkreuz ist jeweils endseitig in den zugeordneten Gelenkgabeln gelagert, wobei sich radial gegenüberliegende Lager jeweils ein Lagerpaar bilden. Dem Lagerpaar bzw. den sich radial gegenüberliegenden Lagern ist jeweils ein Isolationselement zugeordnet, so dass ein das Lagerpaar ein Isolationselementenpaar aufweist.

Auch die EP 0 967 411 A2 offenbart ein Kardangelenk mit einem in einem Innenraum der beiden Gelenkgabeln angeordneten Gelenkkreuz. Das Gelenkkreuz ist endseitig in den Gelenkgabeln aufgenommen, so dass dem jeweils radial gegenüberliegenden Ende des Gelenkkreuzes ein Lagerpaar zugeordnet ist. Dem jeweiligen Lagerpaar ist ein Verbundlager mit Selbstschmiereigenschaften zugeordnet. Das Verbundlager ist aus selbst schmierenden Fasern oder Harzen gebildet.

Die DE 100 01 270 A1 offenbart Kardangelenk mit zwei über ein Zapfenkreuz miteinander gekoppelten Gelenkgabeln. Ein Zapfen des Zapfenkreuzes ist über ein Radiallager in einer Zapfenaufnahme einer der Gelenkgabeln gelagert. Zwischen dem Zapfen und der Zapfenaufnahme ist ein zylindrischer Hülsenkörper aus einem Elastomer angeordnet.

Die FR 2138424 offenbart ein Kardangelenk mit einem im Innenraum der Gelenkgabeln angeordneten Gelenkkreuz, dessen Zapfen in einem Lager aus einem Schmiermaterial gelagert ist.

Der Erfindung liegt die Aufgabe zugrunde, ein Kardangelenk der eingangs genannten Art mit einfachen Mitteln dahingehend zu verbessern, daß dieses unter wirtschaftlichen Aspekten günstiger herstellbar ist, wobei eine effektive akustische und/oder schwingungsdynamische Abkopplung der miteinander zu verbindenden Wellen erreicht wird.

Erfindungsgemäß wird die Aufgabe durch ein Kardangelenk mit den Merkmalen des Anspruchs 1 gelöst.

Mit der erfindungsgemäßen Anordnung von zumindest einem Isolationselementenpaar wird in einfachster Weise eine Stoß- und Schwingungsdämpfung in dem Kardangelenk erreicht. Um eine doppelte Isolierung zu erreichen, kann zweckmäßiger Weise vorgesehen sein, daß beiden Lagerpaaren jeweils ein Isolationselementenpaar zugeordnet ist. Dies bedeutet, daß jedem der vier Lager jeweils ein Isolationselement zugeordnet sein kann.

Zweckmäßig im Sinne der Erfindung ist, wenn die Lager als einreihige Lager ausgeführt sind. Die Lager können beispielsweise als Wälzlager, z. B. als Kugellager ausgeführt sein, wobei die Lager selbstverständlich auch als Gleitlager ausgeführt sein können. Vorzugsweise ist zumindest ein Lager pro Gelenkgabel in der Lage, zusätzlich zu den radialen Lagerkräften noch axiale Lagerkräfte aufzunehmen. Die Lager können in geeigneter Weise in den Gelenkgabeln bzw. deren Gabelschenkeln fixiert werden. Mögliche Ausführungsformen sind zum Beispiel Preßpassung, Klebung oder Formschluß (Schulteranlage, Springring oder dergleichen) der Lageraußenringe in den zugeordneten Gabelschenkeln oder beispielsweise durch Formschluß der Lager z. B. mittels einseitigem und/oder zweiseitigem Schulterschluß an dem Zapfenträger.

Günstig im Sinne der Erfindung ist, wenn die Zapfenträger im Übergang zu deren jeweils endseitig angeordneten Zapfen eine Schulter aufweisen, die an einer zum Innenraum weisenden Seite der Lager anliegt. Möglich ist aber auch, daß das Isolationselement mit seiner Stirnseite an der Schulter anliegt.

In einer bevorzugten Ausgestaltung der Erfindung ist vorgesehen, daß die Zapfen jeweils in radialer Richtung etwas über eine zum Innenraum gegenüberliegenden Außenseite überstehen und mittels eines Sicherungselementes gesichert werden können. Das Sicherungselement kann als Wellensicherungsring ausgeführt sein, und in einer, an geeigneter Stelle des Zapfens eingebrachten Nut aufgenommen sein. Selbstverständlich kann der Zapfen aber auch bündig mit der Außenseite abschließen oder etwas unterhalb der Außenseite enden.

Zur Dämpfung von Schwingungen und/oder axialen Stößen ist zweckmäßig vorgesehen, daß das bzw. die Isolationselemente aus einem elastischen Material, beispielsweise Gummi bestehen. In einer bevorzugten Ausgestaltung ist das bzw. sind die Isolationselemente als Buchse ausgeführt. Das bzw. die Isolationselemente sind bevorzugt als Stoß- und Schwingungsdämpfer ausgestaltet, die anisotrope Eigenschaften aufweisen. Als anisotrope Eigenschaften im Sinne der Erfindung werden Eigenschaften verstanden, bei denen das bzw. die Isolationselemente in zwei senkrecht zueinander stehenden radialen Lagerachsen unterschiedliche Dämpfungseigenschaften, insbesondere unterschiedliche Steifigkeiten haben.

Einerseits kann dadurch besonders einfach eine Anisotropie hinsichtlich der schwingungsdämpfenden Eigenschaft erzeugt werden, da der durch die Ausnehmung gebildete Hohlraum u.a. die elastischen Eigenschaften des bzw. der Isolationselemente verändert. Andererseits kann in einer Ausführungsform ein entsprechender Vorsprung an den Zapfenträgern oder Gelenkgabeln ausgebildet sein, um unterschiedliche Mengen an elastischem Material in den verschiedenen radialen Lagerachsen anzuordnen und um damit unterschiedliche Steifigkeiten in den unterschiedlichen radialen Richtungen einzustellen. Selbstverständlich kann das bzw. können die Isolationselemente aber auch aus einem inhomogenen Material zur Erreichung der anisotropen Eigenschaften gefertigt sein.

So kann in einer Ausgestaltung des bzw. der Isolationselemente die Rotationsnachgiebigkeit des Gelenks minimal ausfallen. Eine hohe Rotationsnachgiebigkeit beispielsweise in einer Kraftfahrzeug-Lenksäule bewirkt ein "schwammiges" Lenkverhalten, was mit den in dem erfindungsgemäßen Kardangelenk realisierbaren hohen Rotationssteifigkeiten vermieden werden kann.

Gleichzeitig kann bei hoher Rotationssteifigkeit eine hohe axiale Nachgiebigkeit des Gelenkes erzielt werden, was beispielsweise in einer Kraftfahrzeug-Lenksäule zum vorteilhaften Herausfiltern der Straßenanregungen genutzt werden kann. Die Minimierung der axialen Steifigkeiten des Kardangelenkes bei hoher Rotationssteifigkeit wird durch den maximierten Abstand der Isolationselemente, nämlich an den Lagerstellen in der jeweiligen Gelenkgabel, in optimaler Weise realisiert.

Stoß- bzw. Schwingungsdämpfung im Sinne der Erfindung ist anhand der sonstigen im kardanischen Gelenk verwendeten Materialien oder Komponenten zu beurteilen. Bei der Anregung mit Körperschallschwingungen stellt sich beispielsweise in bestimmten Frequenzbereichen, insbesondere im niederfrequenten Bereich, gegenüber den sonstigen Materialien des kardanischen Gelenks beispielsweise eine Dämpfung ein, beziehungsweise die Antwort des Materials auf eine Stoßanregung zeigt einen abgeschwächten Impuls.

In einer bevorzugten Ausgestaltung der Erfindung ist vorgesehen, daß das jeweilige Isolationselement zwischen dem Lager und der zugeordneten Gelenkgabel bzw. dem entsprechenden Gabelschenkel angeordnet ist, wobei das Lager mit seiner inneren Lagerschale an dem Zapfenumfang und mit seiner äußeren Lagerschale an einem Innenumfang des Isolationselementes bzw. der Buchse anliegt.

In einer weiter bevorzugten Ausgestaltung ist zweckmäßiger Weise vorgesehen, daß das jeweilige Isolationselement zwischen dem Lager und dem Zapfen angeordnet ist, wobei das Lager mit seiner inneren Lagerschale an einem Außenumfang des Isolationselementes und mit seiner äußeren Lagerschale an einem Innenumfang einer Aufnahmeöffnung in den entsprechenden Gabelschenkeln anliegt.

Es hat sich durch die erfindungsgemäße Anordnung des bzw. der Isolationselemente zum einen zwischen dem Lager und dem Gabelschenkel und zum anderen zwischen dem Lager und dem Zapfen überraschenderweise gezeigt, daß eine besonders effektive akustische und/oder schwingungsdynamische Abkopplung der miteinander verbundenen Wellen erreicht wird. Darüber unterliegen die Isolationselemente einer vergleichsweise geringen, insbesondere nur einseitigen, mechanischen Belastung. Beispielsweise entfallen Torsionskräfte auf die Isolationselemente, so daß die Standzeiten des Lagers deutlich erhöht sind. Darüber hinaus wird so ein besonders einfacher Aufbau erreicht und die Isolationselemente können im Havariefall leicht ausgetauscht werden. Darüber hinaus wird durch eine derartige Anordnung erreicht, daß selbst bei Ausfall des Isolationselements eine Übertragung der Antriebskräfte weiter möglich ist, da beispielsweise bei zweiseitiger Lagerung der Gelenkgabel an dem Gelenkkreuz, einerseits eine weitere intakte Verbindung bestehen bleibt und auf der geschädigten Seite ein Eingriff der Lagerung bestehen bleibt. Dadurch wird auch im Schadensfall immer noch eine Übertragung von Kräften gewährleistet, was insbesondere bei Verwendung des erfindungsgemäßen Kardangelenks im Lenkungsstrang von Kraftfahrzeugen vorteilhaft ist. Darüber hinaus wird das Kardangelenk trotz der Maßnahmen zur akustischen und/oder schwingungsdynamischen Abkopplung der miteinander verbundenen Wellen im Vergleich kompakt. Zusätzliche Maßnahmen zur akustischen und/oder schwingungsdynamischen Abkopplung der Wellen sind nicht erforderlich und die damit verbundenen Nachteile, wie gesteigerter konstruktiver Aufwand und Platzbedarf und vergrößerte bewegte Masse werden vermieden.

Weitere vorteilhafte Ausgestaltungen der Erfindung sind in den Unteransprüchen und in der folgenden Figurenbeschreibung offenbart. Es zeigen:
- Fig. 1: eine Seitenansicht eines Kardangelenks,
- Fig. 2: eine Darstellung entlang des Schnittes A-A aus Figur 1,
- Fig. 3: eine Seitenansicht eines Kardangelenks in einer zweiten Ausführung, und
- Fig. 4: eine Darstellung entlang des Schnittes A-A aus Figur 3.

In den unterschiedlichen Figuren sind gleiche Teile stets mit demselben Bezugszeichen versehen, so daß diese in der Regel auch nur einmal beschrieben werden.

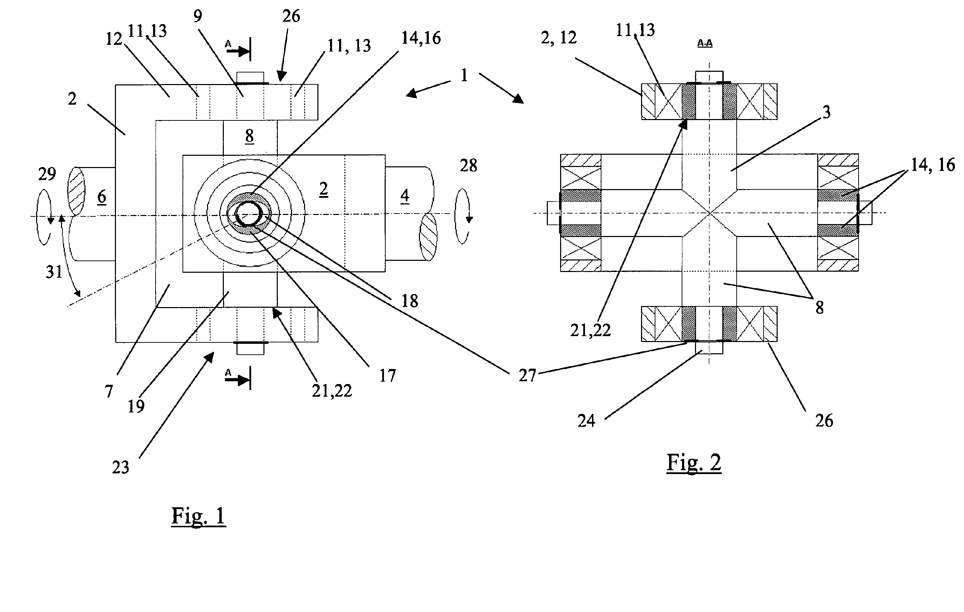

Die Figuren 1 bis 4 zeigen ein Kardangelenk 1, das zwei Gelenkgabeln 2 und ein Gelenkkreuz 3 aufweist. Eine der Gelenkgabeln 2 ist mit einer angetriebenen Welle 4 bzw. Antriebswelle 4 verbunden, wobei die andere Gelenkgabel 2 mit einer anzutreibenden Welle 6 bzw. Abtriebswelle 6 verbunden ist. Die beiden Gelenkgabeln 2 sind um 90° radial verdreht zueinander angeordnet, so daß die beiden Gelenkgabeln 2 einen Innenraum 7 bilden. In dem Innenraum 7 ist das Gelenkkreuz 3 angeordnet. Das Gelenkkreuz 3 ist aus zwei zueinander orthogonal angeordneten Zapfenträgern 8 gebildet. Die Zapfenträger 8 sind in den jeweils zugeordneten Gelenkgabeln 2 drehbar gelagert. Die sich kreuzenden Zapfenträger 8 sind starr miteinander verbunden. Die Zapfenträger 8 sind mit ihren jeweils endseitig angeordneten Zapfen 9 über Lager 11 drehbar in der zugeordneten Gelenkgabel 2 bzw. in deren Gabelschenkeln 12 gelagert. Die sich radial gegenüberliegenden Lager 11 der jeweiligen Gelenkgabel 2 bilden jeweils ein Lagerpaar 13. Zumindest einem der beiden Lagerpaare 13 bzw. dem jeweiligen Lager 11 des zumindest einen Lagerpaares 13 ist jeweils ein Isolationselement 14 zugeordnet, so daß das zumindest ein Lagerpaar **13** ein Isolationselementenpaar 16 aufweist.

In dem in den Figuren **1** bis 4 dargestellten Ausführungsbeispiel ist allen vier Lagern 11 bzw. beiden Lagerpaaren 13 jeweils ein Isolationselement 14 bzw. Isolationselementenpaar 16 zugeordnet. Möglich ist aber auch lediglich einem Lagerpaar 13 ein Isolationselementenpaar 16 zuzuordnen.

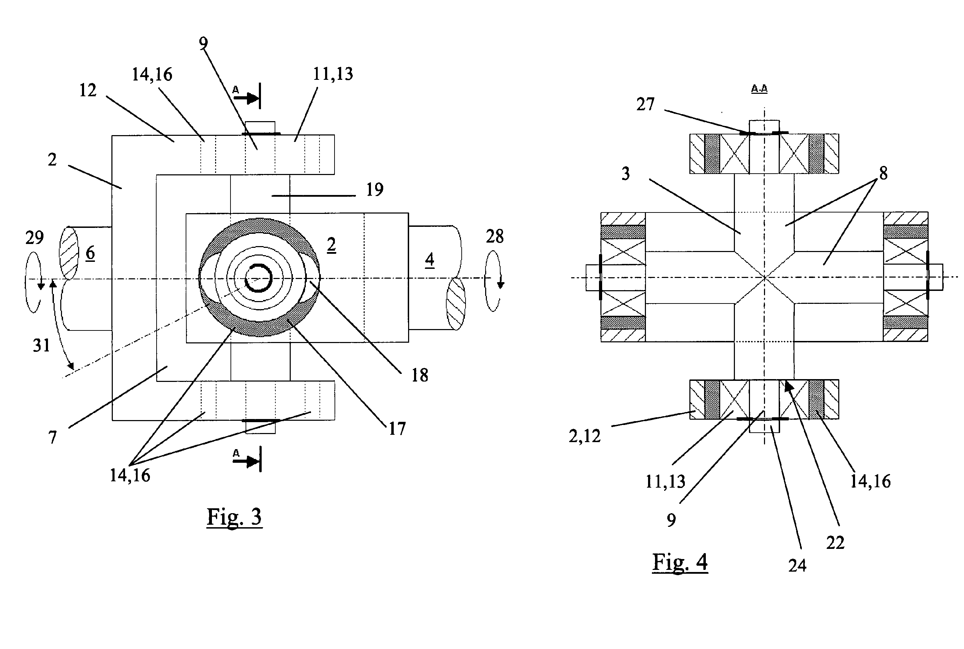

Das Isolationselement 14 ist jeweils als Buchse ausgestaltet und weist an ihrer Wandung 17 Materialausnehmungen bzw. Ausnehmungen 18 auf (Figuren 1 und 3). Damit wird erreicht, daß das Isolationselement 14 bzw. das entsprechende Isolationselementenpaar 16 anisotrope Eigenschaften hinsichtlich unterschiedlicher Dämpfungseigenschaften, insbesondere hinsichtlich unterschiedlicher Steifigkeiten in axialer und radialer Richtung aufweist und somit individuell auf unterschiedliche Erfordemisse einstellbar ist. Die Materielausnehmungen bzw. Ausnehmungen 18 sind in der Seitenansicht gesehen im Wesentlichen teilellipsenartig bzw. halbmondförmig ausgestaltet. Die Materialausnehmungen bzw. Ausnehmungen 18 können in der Seitenansicht gesehen aber auch andere geometrische Ausgestaltungen aufweisen um individuell auf individuelle Erfordernisse des Kardangelenks 1 einstellbar zu sein. Das bzw. die Isolationselemente 14 können somit auch als Stoß- und. Schwingungsdämpfer beispielsweise zur akustischen und/oder schwingungsdynamischen Abkopplung der beiden miteinander verbundenen Welle 4 bzw. 6 bezeichnet werden.

Der jeweilige Zapfenträger 8 weist einen Grundkörper 19 auf, an dem sich der Zapfen 9 anschließt. Der Zapfen 9 ist etwas schmaler als der Grundkörper 19, so daß in einem Übergang 21 vom Grundkörper 19 zum Zapfen 9 eine Schulter 22 ausgebildet ist.

In dem in den Figuren 3 und 4 dargestellten Ausführungsbeispiel ist das jeweilige Isolationselement 14 in einer Aufnahmeöffnung 23 zwischen dem jeweiligen Lager 11 und der zugeordneten Gelenkgabel 2 bzw. deren Gabelschenkel 12 angeordnet. Die Aufnahmeöffnung 23 ist jeweils in dem entsprechenden Gabelschenkel 12 eingebracht. Das Lager 11 umfaßt mit seiner inneren Lagerschale einen Außenumfang des Zapfens 9, wobei ein Innenumfang des Isolationselements 14 eine äußere Lagerschale des Lagers 11 umfaßt. Das Lager 11 liegt mit seiner zum Innenraum 7 weisenden Stirnseite an der Schulter 22 an.

Der Zapfen 9 durchgreift das Lager 11 und steht mit seinem freien Ende 24 etwas über eine zum Innenraum 7 gegenüberliegende Außenseite 26 der Gelenkgabel 2 bzw. deren Gabelschenkel 12 über. Dem freien Ende 24 ist ein Sicherungselement 27, beispielsweise ein Wellensicherungsring zugeordnet, der an der zur Außenseite 26 weisenden Seite des Lagers 11 anliegt. Zur Aufnahme des Sicherungselementes 27 ist in dem Zapfen 9 an geeigneter Stelle eine entsprechende Nut eingebracht. Selbstverständlich kann der Zapfen 9 mit seinem freien Ende 24 auch innerhalb des Lagers 11 enden, oder bündig mit der Außenseite 26 abschließen.

In dem in den Figuren 1 und 2 dargestellten Ausführungsbeispiel ist das Isolationselement 14 in der Aufnahmeöffnung 23 jeweils zwischen dem Lager 11 und dem Zapfen 9 angeordnet. Hierbei umfaßt der Innenumfang des Isolationselementes 14 den Außenumfang des Zapfens 9, wobei die innere Lagerschale des Lagers 11 den Außenumfang des Isolationselementes 14 umfaßt. Das Isolationselement 14 liegt mit seiner zum Innenraum 7 weisenden Stirnseite an der Schulter 22 an, wobei die dazu gegenüberliegende Stirnseite bevorzugt bündig mit der Außenseite 26 abschließt. Das Sicherungselement 27 liegt an der Außenseite 26 weisenden Stirnseite des Isolationselementes 14 an.

Die Isolationselemente 14 werden an die jeweiligen Lager 11 stoff-, form- oder kraftschlüssig angebunden. Beispielsweise wird der Stoffschluß durch Vulkanisation oder Kleben, der Formschluß durch Anlage an Schultern in der Gelenkgabel 2 bzw. in deren Gabelschenkeln 12 oder Sicherungsringe in den Gelenkgabeln 2 bzw. in deren Gabelschenkeln 12 und der Kraftschluß durch Preßpassung der Isolationselemente 14 in den Gelenkgabeln 2 bzw. in deren Gabelschenkeln 12 erzielt. In den Figuren 1 bis 4 wird beispielsweise der Kraft- oder Stoffschluß zwischen den Lagern 11 und den Isolationselementen 14 dargestellt.

Die Lager 11 sind als einreihige Lager beispielsweise als Wälzlager, z.B. als Nadel-oder Kugellager ausgeführt, wobei die Lager 11 selbstverständlich auch als Gleitlager ausgeführt sein können.

Die Lager 11 werden geeignet radial zur Gelenkachse in den Gelenkgabeln 2 bzw. deren Gabelschenkeln 12 fixiert. Mögliche Ausführungsformen sind zum Beispiel Preßpassung, Klebung oder Formschluß (Schulteranlage (Figuren 1 und 2)) oder Preßpassung, Klebung oder Formschluß (Sicherungsring oder dergleichen) der Lageraußenringe in den Gelenkgabeln 2 bzw. deren Gabelschenkein 12 (Figuren 3 und 4).

In dem Kardangelenk 1 nach den Ausführungsbeispielen der Figuren 1 bis 4 wird ein Eingangsmoment (Drehrichtung 28) über die angetriebene Welle 4 (Antriebswelle) auf den zugeordneten Zapfenträger 8 der im Verbund stehend mit dem kreuzenden Zapfenträger 8 das Moment an diesen weiterleitet und dann weiter auf die Gelenkgabel 2 der anzutreibenden Welle 6 bzw. Abtriebswelle überträgt. Dies ist mittels des zum Eingangsmoment (Drehrichtung 28) gleichsinnigen Ausgangsmoments (Drehrichtung 29) dargestellt. In axialer Gelenkrichtung gesehen erlaubt das Isolationselement 14 so eine große Nachgiebigkeit, die zur Isolation genutzt werden kann, während die anisotrope Steifigkeitscharakteristik des Isolationselementes 14 eine hohe Drehsteifigkeit des Kardangelenkes 1 bereitstellt.

Zudem wird eine besonders effektive akustische und/oder schwingungsdynamische Abkopplung der miteinander verbundenen Wellen 4 bzw. 6 erreicht. Bei dem dargestellten Ausführungsbeispiel ist die Antriebswelle 4 in der Zeichnungsebene rechts dargestellt. Selbstverständlich kann die Antriebswelle 4 in der Zeichnungsebene auch links angeordnet sein. Natürlich können die Drehrichtungen 28 bzw. 29 auch entgegengesetzt zum dargestellten Drehsinn sein.

Das in den Figuren 1 bis 4 jeweils dargestellte Kardangelenk 1 eignet sich insbesondere zum Einsatz in einer Lenksäule eines Kraftfahrzeuges. Die Wellen 4 bzw. 6 sind zueinander gefluchtet ausgerichtet dargestellt. Im Fahrzeug liegt üblicherweise eine zueinander abgewinkelte Position vor, wobei das Kardangelenk die Drehübertragung aufrechterhält. Die abgewinkelte Position ist in den Figuren 1 und 3 mittels des Inklinationswinkels 31 dargestellt.

## Patentansprüche

1. Kardangelenk, das zwei Gelenkgabeln (2) und ein Gelenkkreuz (3) aufweist, wobei eine der Gelenkgabeln (2) mit einer angetriebenen Welle (4) bzw. Antriebswelle und die andere Gelenkgabel (2) mit einer anzutreibenden Welle (6) bzw. Abtriebswelle verbindbar bzw. verbunden ist, und wobei die beiden Gelenkgabeln (2) um 90° zueinander radial verdreht angeordnet sind, so daß die beiden Gelenkgabeln (2) einen Innenraum (7) bilden, in dem das Gelenkkreuz (3) angeordnet ist, und wobei das Gelenkkreuz (3) aus zwei zueinander orthogonal angeordneten Zapfenträgern (8) gebildet ist, die in den jeweils zugeordneten Gelenkgabeln (2) drehbar gelagert sind, wobei die Zapfenträger (8) mit ihren Zapfen (9) über Lager (11) drehbar in der jeweils zugeordneten Gelenkgabel (2) bzw. in deren Gabelschenkeln (12) gelagert sind, wobei die sich radial gegenüberliegenden Lager (11) der jeweiligen Gelenkgabel (2) jeweils ein Lagerpaar (13) bilden, und wobei zumindest einem der beiden Lagerpaare (13) bzw. dem jeweiligen Lager (11) des zumindest einen Lagerpaares (13) jeweils ein Isolationselement (14) zugeordnet ist, so daß das zumindest eine Lagerpaar (13) ein Isolationselementenpaar (16) aufweist, wobei das jeweilige Isolationselement (14) in seiner Wandung (17) Materialausnehmungen bzw. Ausnehmungen (18) aufweist,
**dadurch gekennzeichnet, daß**
die Materialausnehmungen bzw. Ausnehmungen (18) teilelliptisch bzw. halbmondförmig ausgestaltet sind, wobei die Materialausnehmungen bzw. Ausnehmungen (18) in Seitenansicht gesehen bezogen auf den Zapfen (9) gegenüberliegend angeordnet sind.

2. Kardangelenk nach Anspruch 1,
**dadurch gekennzeichnet, daß**
die Zapfenträger (8) im Übergang zu deren Zapfen (9) eine Schulter (22) aufweisen.

3. Gelenkgabel nach Anspruch 1 oder 2,
**dadurch gekennzeichnet, daß**
die Zapfen (9) jeweils in radialer Richtung etwas über eine zum Innenraum (7) gegenüberliegende Außenseite (26) überstehen, und mit einem Sicherungselement (27) sicherbar sind.

4. Kardangelenk nach einem der vorhergehenden Ansprüche,
**dadurch gekennzeichnet, daß**
das jeweilige Isolationselement (14) als Buchse ausgestaltet ist.

5. Kardangelenk nach einem der Ansprüche 1 bis 4,
**dadurch gekennzeichnet, daß**
das jeweilige Isolationselement (14) anisotrope Eigenschaften aufweist.

6. Kardangelenk nach einem der vorhergehenden Ansprüche,
**dadurch gekennzeichnet, daß**
das jeweilige Isolationselement (14) zwischen dem Lager (11) und der zugeordneten Gelenkgabel (2) bzw. dem entsprechenden Gabelschenkel (12) angeordnet ist

7. Kardangelenk nach einem der Ansprüche 1 bis 5,
**dadurch gekennzeichnet, daß**
das jeweilige Isolationselement (14) zwischen dem Lager (11) und dem Zapfen (9) angeordnet ist.

## Claims

1. Cardan joint which has two joint forks (2) and a universal joint (3), it being possible for one of the joint forks (2) to be connected to a driven shaft (4) or drive shaft and for the other joint fork (2) to be connected to a shaft (6) to be driven or output shaft, or the said joint forks (2) being connected to the said shafts (4, 6), and the two joint forks (2) being arranged such that they are turned radially by 90° with respect to one another, with the result that the two joint forks (2) form an inner space (7), in which the universal joint (3) is arranged, and the universal joint (3) being formed from two journal carriers (8) which are arranged orthogonally with respect to one another and are mounted rotatably in the respectively associated joint forks (2), the journal carriers (8) being mounted by way of their journals (9) via bearings (11) rotatably in the respectively associated joint fork (2) or in its fork limbs (12), those bearings (11) of the respective joint forks (2) which lie radially opposite one another forming in each case a bearing pair (13), and at least one of the two bearing pairs (13) or the respective bearing (11) of the at least one bearing pair (13) being assigned in each case an insulation element (14), with the result that the at least one bearing pair (13) has an insulation-element pair (16), the respective insulation element (14) having material recesses or recesses (18) in its wall (17), **characterized in that** the material recesses or recesses (18) are of partially elliptical or crescent-shaped design, the material recesses or recesses (18) being arranged so as to lie opposite one another in relation to the journal (9), as viewed from the side.

2. Cardan joint according to Claim 1, **characterized in that** the journal carriers (8) have a shoulder (22) at the transition to their journals (9).

3. Joint fork according to Claim 1 or 2, **characterized in that** the journals (9) protrude in each case in the radial direction somewhat beyond an outer side (26) which lies opposite the inner space (7), and can be secured by way of a securing element (27).

4. Cardan joint according to one of the preceding claims, **characterized in that** the respective insulation element (14) is equipped as a bush.

5. Cardan joint according to one of Claims 1 to 4, **characterized in that** the respective insulation element (14) has anisotropic properties.

6. Cardan joint according to one of the preceding claims, **characterized in that** the respective insulation element (14) is arranged between the bearing (11) and the associated joint fork (2) or the corresponding fork limb (12).

7. Cardan joint according to one of Claims 1 to 5, **characterized in that** the respective insulation element (14) is arranged between the bearing (11) and the journal (9).

## Revendications

1. Joint à croisillon, qui présente deux fourchettes de joint (2) et un croisillon (3), l'une des fourchettes de joint (2) pouvant être connectée ou étant connectée à un arbre entraîné (4) ou un arbre d'entraînement et l'autre fourchette de joint (2) pouvant être connectée ou étant connectée à un arbre d'entraînement (6) ou un arbre de sortie, et les deux fourchettes de joint (2) étant tournées radialement de 90° l'une par rapport à l'autre de telle sorte que les deux fourchettes de joint (2) forment un espace interne (7) dans lequel est disposé le croisillon (3), et le croisillon (3) étant formé de deux supports de tourillon (8) perpendiculaires l'un à l'autre, qui sont montés à rotation dans les fourchettes de joint (2) associées respectives, les supports de tourillon (8) étant montés avec leurs tourillons (9) par le biais de paliers (11) de manière rotative dans la fourchette de joint (2) associée respective ou dans ses branches de fourchette (12), les paliers (11) radialement opposés de chaque fourchette de joint (2) formant à chaque fois une paire de paliers (13), et au moins l'une des deux paires de paliers (13) ou le palier respectif (11) de l'au moins une paire de paliers (13) étant à chaque fois associé(e) à un élément isolant (14), de sorte que l'au moins une paire de paliers (13) présente une paire d'éléments isolants (16), l'élément isolant respectif (14) présentant dans sa paroi (17) des évidements de matière ou des évidements (18),
**caractérisé en ce que**
les évidements de matière ou évidements (18) sont configurés avec une forme partiellement elliptique ou semi-circulaire, les évidements de matière ou évidements (18) étant disposés, vus de côté, en regard l'un de l'autre par rapport aux tourillons (9).

2. Joint à croisillon selon la revendication 1,
**caractérisé en ce que**
les supports de tourillon (8) présentent, au niveau de la transition avec leurs tourillons (9), un épaulement (22).

3. Joint à croisillon selon la revendication 1 ou 2,
**caractérisé en ce que**
les tourillons (9) dépassent à chaque fois dans la direction radiale quelque peu au-delà d'un côté extérieur (26) opposé à l'espace interne (7), et peuvent être fixés avec un élément de fixation (27).

4. Joint à croisillon selon l'une quelconque des revendications précédentes,
**caractérisé en ce que**
l'élément isolant respectif (14) est réalisé sous forme de douille.

5. Joint à croisillon selon l'une quelconque des revendications 1 à 4,
**caractérisé en ce que**
l'élément isolant respectif (14) présente des propriétés anisotropes.

6. Joint à croisillon selon l'une quelconque des revendications précédentes,
**caractérisé en ce que**
l'élément isolant respectif (14) est disposé entre le palier (11) et la fourchette de joint associée (2) ou la branche de fourchette correspondante (12).

7. Joint à croisillon selon l'une quelconque des revendications 1 à 5,
**caractérisé en ce que**
l'élément isolant respectif (14) est disposé entre le palier (11) et le tourillon (9).
